Europäisches Patentamt

European Patent Office

Office européen des brevets

(11) Numéro de publication : **0 190 978 B1**

# FASCICULE DE BREVET EUROPÉEN

(45) Date de publication du fascicule du brevet :
07.09.88

(21) Numéro de dépôt : 86400248.0

(22) Date de dépôt : 06.02.86

(51) Int. Cl.⁴ : **B 60 G 21/10, B 60 G 17/02**

(54) **Dispositif anti-roulis hydraulique.**

(30) Priorité : 07.02.85 FR 8501911

(43) Date de publication de la demande :
13.08.86 Bulletin 86/33

(45) Mention de la délivrance du brevet :
07.09.88 Bulletin 88/36

(84) Etats contractants désignés :
DE GB IT

(56) Documents cités :
DE-C- 946 412
FR-A- 1 112 916
FR-A- 1 202 600
FR-A- 1 374 399
GB-A- 927 745
US-A- 3 871 635
US-A- 4 411 447
PATENTS ABSTRACTS OF JAPAN, vol. 8, no. 64 (M-285) [1501], 27 mars 1984; & JP - A - 58 214 406 (TOYODA JIDO SHOKKI SEISAKUSHO K.K.) 13-12-1983

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Richard, Denis**
**65, rue Mirabeau**
**F-94600 Choisy-le-Roi (FR)**

(74) Mandataire : **Boivin, Claude**
**9, rue Edouard-Charton**
**F-78000 Versailles (FR)**

Jouve, 18, rue St-Denis, 75001 Paris, France

## Description

La présente invention concerne un dispositif antiroulis hydraulique pour véhicule automobile du genre de ceux qui sont montés sur un ou deux essieux à suspension par roues indépendantes du véhicule pour s'opposer à l'inclinaison de la caisse par rapport à un plan de symétrie longitudinal.

Les dispositifs anti-roulis qui sont montés sur les véhicules, se composent, en général, d'une barre de torsion transversale dont chaque extrémité est solidaire en rotation d'un bras support de roue. Un déplacement relatif et dans des sens opposés des deux roues d'un essieu par rapport à la caisse sollicite la barre de torsion, alors qu'un déplacement relatif et de même sens des deux roues de l'essieu par rapport à la caisse provoque une rotation sans torsion de la barre.

Les dispositifs anti-roulis sont surtout utiles dans les virages, où la caisse a tendance à prendre une inclinaison en raison de la force centrifuge ; ils présentent l'inconvénient, en ligne droite, de durcir la suspension. Aussi a-t-on déjà proposé différentes solutions pour que les dispositifs anti-roulis ne soient efficaces que dans les virages, en étant sans action dans les lignes droites.

Le brevet français FR-A-1 374 399 décrit une suspension pour grue à essieu rigide comprenant un vérin hydraulique dont les deux chambres sont reliées l'une à l'autre, dont le cylindre et la tige de piston sont reliés à deux leviers montés pivotants sur des supports solidaires de l'essieu et reliés à une conduite d'obturation munie d'une vanne et au côté correspondant du châssis de la grue ; l'ouverture et la fermeture de la vanne permettent de faire varier la souplesse de la suspension.

La présente invention a pour objet un dispositif anti-roulis dont le fonctionnement est très simple.

Ce dispositif est caractérisé en ce qu'il comprend un vérin hydraulique dont chacune des chambres est reliée à un accumulateur oléopneumatique et dont le cylindre et la tige de piston sont reliés respectivement au pivot de l'une des roues d'un essieu et au pivot de l'autre roue de cet essieu, de façon que des déplacements des pivots dans des sens opposés produisent des déplacements de sens opposés du cylindre et de la tige de piston, en ce que les deux chambres du vérin sont reliées l'une à l'autre par une conduite de dérivation sur laquelle est interposée une électro-vanne, et en ce qu'il comporte des moyens pour fermer l'électro-vanne à partir d'un seuil de braquage donné de la direction.

En ligne droite, les deux chambres du vérin sont reliées l'une à l'autre par la conduite de dérivation de sorte que le piston peut se déplacer librement et qu'il n'y a pas d'effet anti-roulis ; la suspension n'est pas durcie. En revanche, lors d'un braquage, la vanne est fermée de sorte que les accumulateurs oléo-pneumatiques s'opposent au déplacement relatif du cylindre du vérin et de son piston, qui se produit lors d'un roulis ; ils s'opposent donc au roulis.

Les moyens pour fermer l'électro-vanne sont de préférence commandés directement par le volant de direction.

On a décrit ci-après, à titre d'exemple non limitatif, un mode de réalisation du dispositif selon l'invention, avec référence au dessin annexé dans lequel :

La Figure 1 montre un dispositif anti-roulis appliqué à un essieu avant directeur et moteur ;

La Figure 2 montre en perspective la commande de l'électro-vanne par le volant de direction, ;

La Figure 3 est une vue en bout de la commande de la Figure 2.

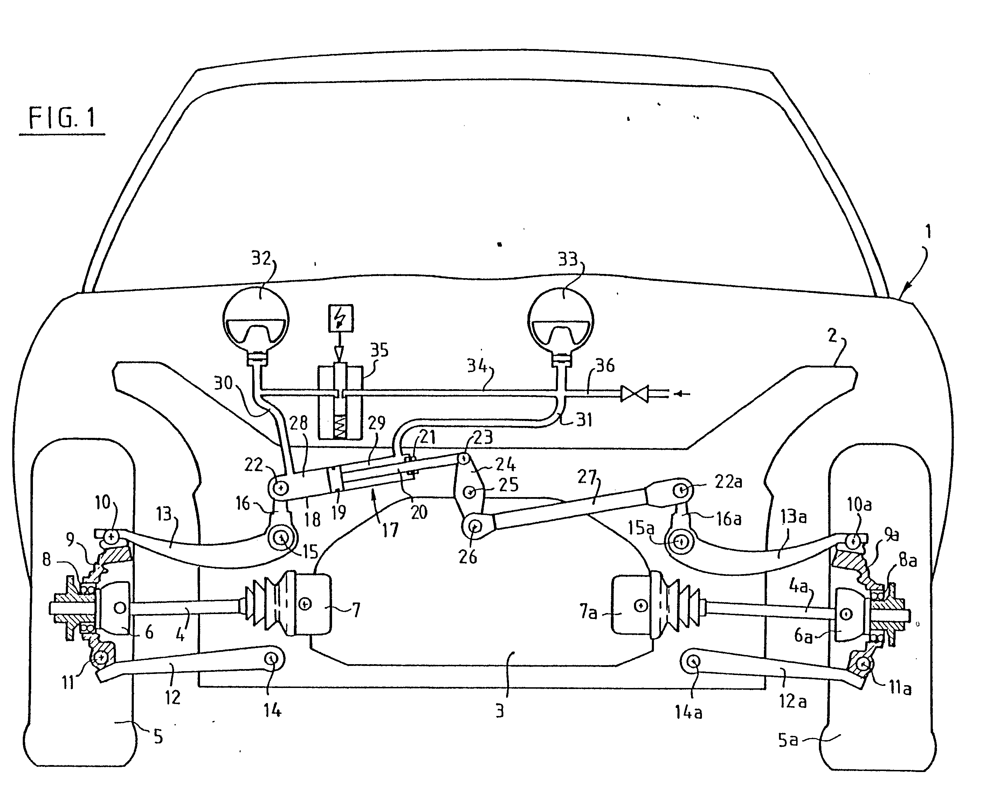

On voit à la Figure 1 un véhicule 1 comportant un châssis 2 sur lequel est monté un moteur 3 relié par une transmission 4-4a aux roues avant 5-5a directrices et motrices. Les joints de transmission sont représentés en 6-6a et 7-7a. Les roues 5-5a sont montées par l'intermédiaire de roulements 8-8a sur des pivots de roues 9-9a sur lesquels est articulée une timonerie de direction non représentée.

Chaque pivot de roue 9-9a porte deux rotules 10-10a et 11-11a sur lesquelles sont articulées les bras de suspension 12-12a et 13-13a dont les extrémités opposées sont articulées sur des axes 14-14a et 15-15a portés par le châssis 2. Les bras supérieurs 13-13a comportent des prolongements 16-16a.

Un vérin 17 se compose d'un cylindre 18 et d'un piston 19 solidaire d'une tige 20 qui est montée coulissante à travers un joint 21 porté par le cylindre 18. Celui-ci est articulé en 22 à l'extrémité du prolongement 16 du bras supérieur de la roue droite 5. L'extrémité de la tige 20 est articulée en 23 à l'une des extrémités d'un levier 24 qui est monté pivotant autour d'un axe 25 fixé au châssis 2 et dont l'autre extrémité porte une articulation 26 reliée par une barre de connexion 27 à une articulation 22a du prolongement 16a du bras supérieur de la roue gauche 2a.

Le piston 19 sépare dans le cylindre 18 deux chambres à huile 28 et 29 qui sont reliées hydrauliquement par des conduits 30 et 31 à deux accumulateurs oléopneumatiques 32 et 33.

Une conduite de dérivation 34 relie les deux conduits 30 et 31 par l'intermédiaire d'une électro-vanne 35 normalement ouverte et qui peut fermer le circuit sous l'action d'un signal fourni par le braquage de la direction, par exemple par l'actionnement d'un contact commandé par la crémaillère ; mais ce signal dépend de préférence de la rotation du volant de direction. La conduite 34 est par ailleurs reliée par une conduite 36 à la source de pression de la suspension avant.

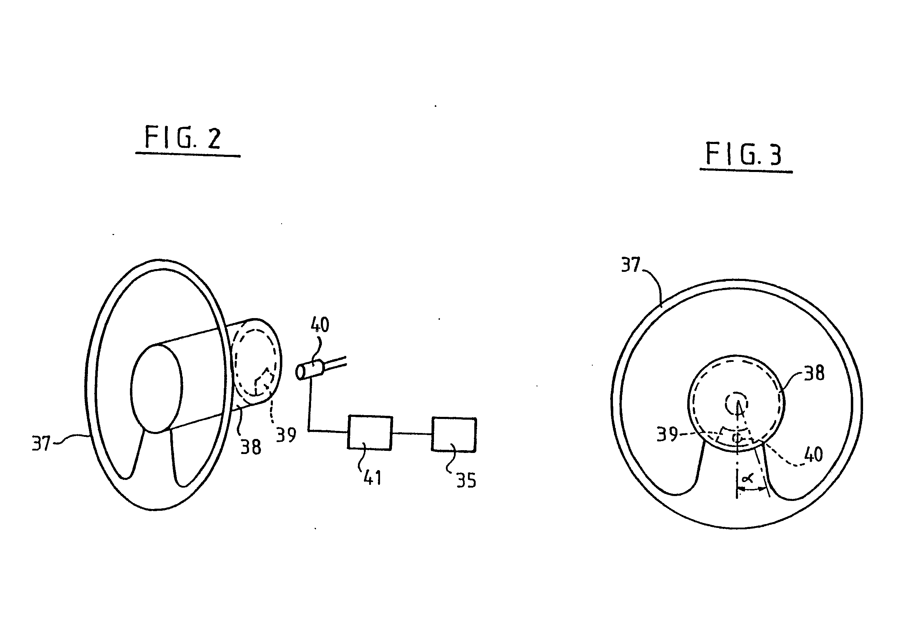

Aux Figures 2 et 3, on voit le volant de direction 37 dont le fût 38 porte une languette 39 mobile devant un capteur de proximité 40. Ce capteur est connecté à des moyens de conditionnement 41 du signal dont la sortie est elle-même connectée à l'électro-vanne 35, de façon que cette dernière soit ouverte quand la languette 39 se trouve devant le capteur, en position de ligne droite. On voit à la Figure 3 que, dans ces conditions, l'électro-vanne 35 ne se ferme que lorsque le volant 37 a pivoté d'un angle déterminé α, dans un sens ou dans l'autre.

Quand le véhicule se déplace en ligne droite la vanne 35 étant ouverte, le déplacement du piston 19 dans le cylindre 18 du vérin 17 se traduit par des déplacements de liquide par la conduite de dérivation 34 sans solliciter l'élasticité des accumulateurs oléopneumatiques 32 et 33. On voit immédiatement sur la Figure qu'un déplacement relatif simultané et de sens opposés des deux roues 5-5a de l'essieu, ce qui correspond à une inclinaison de la caisse du véhicule, provoque un déplacement relatif du cylindre 18 et du piston 19 du vérin dans un sens ou dans le sens opposé selon que la caisse s'incline à droite ou à gauche (dans le sens d'avancement du véhicule).

On voit également qu'un déplacement relatif simultané et de même sens des deux roues 5-5a de l'essieu provoque un déplacement du cylindre 18 et du piston 19 du vérin dans le même sens et ne fait pas intervenir le circuit hydraulique.

Lorsque, dans un virage, l'électro-vanne 35 étant fermée la caisse s'incline, le piston 19 du vérin se déplace dans son cylindre 18 et les accumulateurs oléo-pneumatiques 32 et 33 sont sollicités ; ils s'opposent au déplacement du piston et tendent à ramener la caisse en position d'équilibre.

Le dispositif anti-roulis qui vient d'être décrit est appliqué à un essieu avant ; il pourrait également être appliqué à un essieu arrière.

## Revendications

1. Dispositif anti-roulis hydraulique pour véhicule automobile pour essieu à suspension par roues indépendantes, caractérisé en ce qu'il comprend un vérin hydraulique (17) dont chacune des chambres (28 et 29) est reliée à un accumulateur oléo-pneumatique (32 ou 33), et dont le cylindre (18) et la tige de piston (20) sont reliés respectivement au pivot (9) de l'une des roues d'un essieu et au pivot (9a) de l'autre roue de cet essieu, de façon que des déplacements des pivots dans des sens opposés produisent des déplacements de sens opposés du cylindre et de la tige de piston, en ce que les deux chambres du vérin sont reliées l'une à l'autre par une conduite de dérivation (34) sur laquelle est interposée une électrovanne (35), et en ce qu'il comporte des moyens pour fermer l'électro-vanne (35) à partir d'un seuil de braquage donné de la direction.

2. Dispositif anti-roulis selon la revendication 1, caractérisé en ce que les moyens pour fermer l'électro-vanne (35) sont commandés directement par le volant de direction (37).

## Claims

1. A hydraulic anti-roll device for motor vehicles for an independent wheel suspension axle, characterized in that it comprises a hydraulic jack (17) each of the chambers (28 and 29) of which is connected to an oleo-pneumatic accumulator (32 or 33) and the cylinder (18) and piston rod (20) of which are connected respectively to the pivot (9) of one of the wheels of an axle and to the pivot (9a) of the other wheel of this axle, so that movements of the pivots in opposite directions produce movements in opposite directions of the cylinder and of the piston rod, in that the two chambers of the jack are connected to each other through a by-pass duct (34) in which a solenoid valve (35) is inserted, and in that it includes means for closing the solenoid valve (35) from a given turning threshold of the steering.

2. Anti-roll device according to claim 1, characterized in that the means for closing the solenoid valve (35) are controlled directly by the steering wheel (37).

## Patentansprüche

1. Hydraulische Antischlingervorrichtung für Kraftfahrzeuge mit Einzelradaufhängung, dadurch gekennzeichnet, daß sie eine hydraulische Hubvorrichtung (17) aufweist, bei der jede der Kammern (28 und 29) mit einem ölpneumatischen Speicher (32 oder 33) verbunden ist und bei der der Zylinder (18) und die Kolbenstange (20) jeweils mit dem Achszapfen (9) des einen Rades einer Achse und dem Achszapfen (9a) des anderen Rades dieser Achse derart verbunden sind, daß Verschiebungen der Achszapfen in entgegengesetzten Richtungen Verschiebungen des Zylinders und der Kolbenstange in entgegengesetzten Richtungen bewirken und daß die beiden Kammern der Hubvorrichtung miteinander über eine Zweigleitung (34) verbunden sind, in welche ein Magnetventil (35) eingeschaltet ist und daß sie Mittel aufweist, um das Magnetventil (35) von einen durch die Lenkung gegebenen Schwellenwert des Radeinschlags an zu schließen.

2. Antischlingervorrichtung nach Anspruch 1, dadurch gekennzeichnet, daß die Mittel zum Schließen des Magetventils (35) direkt durch das Lenkrad der Lenkung gesteuert werden.

FIG.1

1

2

32    33

35    34    36

30    31

28    29    21    23

22    24

25    27    22a

16    18    19    20    26    15a    16a    13a    10a

10    13    17    9a

9    8a

8    4a

7    7a    6a

6    4    11a

11

12    14    14a    12a

5    3    5a

0 190 978

FIG. 2

FIG. 3

0 190 978